# EUROPEAN PATENT SPECIFICATION

(11) **EP 3 771 578 B1**
(45) Date of publication and mention of the grant of the patent: **08.06.2022**
(21) Application number: 19188932.8
(22) Date of filing: 29.07.2019
(51) Int. Cl.: B60J 7/02, B60J 7/043

(54) **OPEN ROOF CONSTRUCTION FOR A VEHICLE**
OFFENE DACHKONSTRUKTION FÜR EIN FAHRZEUG
STRUCTURE DÉCAPOTABLE POUR VÉHICULE

(43) Date of publication of application: 03.02.2021
(73) Proprietor: Inalfa Roof Systems Group B.V., 5807 GW Oostrum (NL)
(72) Inventor: ALBERS,Thomas Anton Martijnszoon, 5801 BN Venray (NL); VERVOORT, Stephan Christiaan, 5831 LD Boxmeer (NL)
(74) Representative: De Vries & Metman

(56) References cited:
- EP-A1- 1 741 588
- EP-A1- 3 401 144
- WO-A1-2019/024996

## Description

The present invention relates to an open roof construction for a vehicle according to the preamble of claim 1.

Such an open roof construction is described for example in WO 2019/024996 A1. In such open roof construction, the operating mechanism must be designed specifically for every type of vehicle.

It is an object of the present invention to provide an open roof construction which comprises a very versatile operating mechanism.

The open roof construction according to the invention has the feature of the characterizing portion of claim 1.

Attaching the electric motor to the closure has the advantage that it moves up with the closure so that it does not form a permanent obstacle on the frame which could affect movements of other parts. For example, in the case of a spoiler roof in which the second support member is substantially stationary in longitudinal direction, the first support member can be moved rearwardly with the closure and, because the drive member of the second support member being moved up, without thus being hindered by this drive member of the second support member.

Preferably, the first and second support members have a similar structure with at least some parts being the same , but the second support members are mounted in an upside down relationship with respect to the first support members.

This has the advantage that the total number of different parts can be reduced. If especially complex parts can be used for both the first and second supports, this may reduce production costs considerably.

In case the first support member comprises a first slide which is mounted on a guide rail alongside the roof opening and is provided with at least a horizontal drive member to drive the second support member and the closure in horizontal direction along the guide rail and the second support members are provided on a second slide which is slidable with respect to a closure guide rail, such that the closure is able to slide with respect to the second support members when the first support member and the closure are driven by the horizontal drive member, it is preferred that at least the first and second slide are equal.

In an embodiment, the second support member includes a lever pivotally connected to the stationary part and controlled by a curve plate drivable by a drive motor.

Such lever can be controlled precisely and provides a stable support.

Preferably, the drive member includes a self-braking linear spindle directly connected to an output shaft of the electric motor and a spindle nut mounted on the spindle and connected to the curve slide.

Such self-braking spindle has the advantage that in all positions of the closure it has the self-braking properties. This means that the curves of the curve slide do not need horizontal curve portions in end positions of the support member in which the closure must resist large vertical forces such as in the closed position and the upper position. The curve slider may thus be made more compact and a smaller displacement in the normal operation of the closure.

The first and second slide may be provided with a housing carrying the vertical drive member and the first or second support member, preferably the same housing.

The drive motor may be drivably connected to a self-braking spindle drive including a linear spindle and a nut, the spindle drive being in engagement with a curve plate including at least one curve for vertically adjusting the second support member to move the closure up and down at least at a distance behind the front side.

The at least one curve only has inclined portions, which has been made possible by the self-braking property of the drive system.

The driven part of the spindle drive may be attached to the closure, and the second support member preferably includes a lever having at least one pin in engagement with the curve of the curve plate and being pivotally attached to the stationary part.

The linear spindle may be directly coupled to an output shaft of the drive motor.

The invention will be elucidated hereafter with reference to the drawings showing embodiments of the open roof construction according to the invention.
Fig. 1a and 1b show a first embodiment of the open roof construction in very schematic perspective view and in two different positions.
Fig. 2a and 2b show the open roof construction of Fig. 1 in very schematic plan view with only the drive members indicated and in the same positions.
Figs. 3a, 3b and 3c are very schematic side views of the open roof construction of Fig. 2 on a larger scale and in three different positions.
Figs. 4a and 4b are a simplified plan and enlarged side view of the operating mechanism for the open roof construction of Fig. 3.
Fig. 5a is a plan view similar to that of Fig. 4a, Figs. 5b and 5c show in perspective view the front and rear drive members, and Fig. 5d is an enlarged sectional view according to lines Vd-Vd.
Figs. 6a, 7a and 8a are enlarged side views of the operating mechanism for the open roof construction of Fig. 3 from the outside in, in the same three positions.
Figs. 6b, 7b and 8b are perspective views of the operating mechanism of Fig. 6a, 7a and 8a in the same three positions.
Figs. 9a, b show an alternative embodiment of the rear support member of the operating mechanism for the open roof construction, in two different positions.

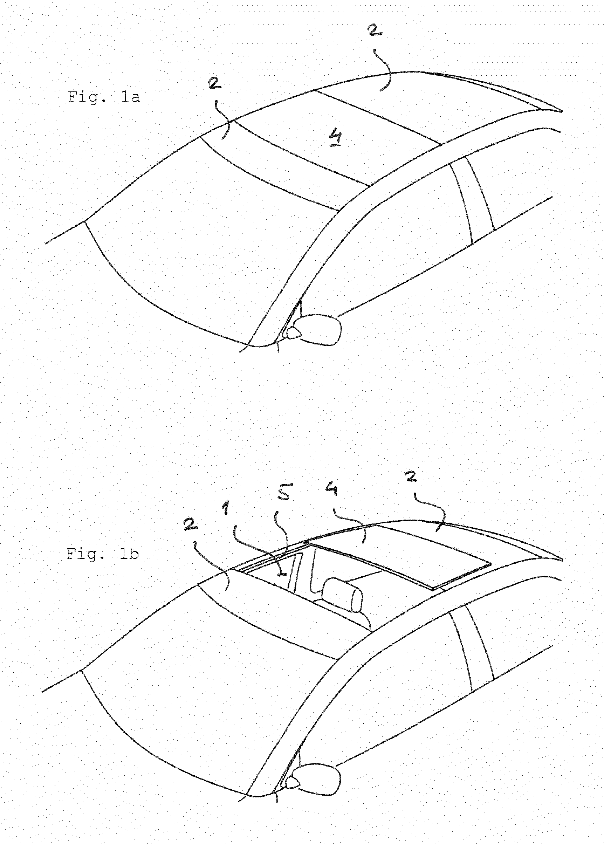

The drawing, and in first instance Figs. 1 - 3 show an open roof construction for a vehicle, in particular a motor vehicle such as a passenger car. As is shown in Fig. 1, this vehicle is provided with an opening 1 in its fixed roof 2, whereby it is noted that said fixed roof 2 may either form part of the vehicle or of the open roof construction itself, which in that case makes up the entire roof of the vehicle. The fixed roof 2 may consist of an integral part of the vehicle or of one or more (metal or transparent) panels, which may be fixed, removable or form a separate adjustable roof element.

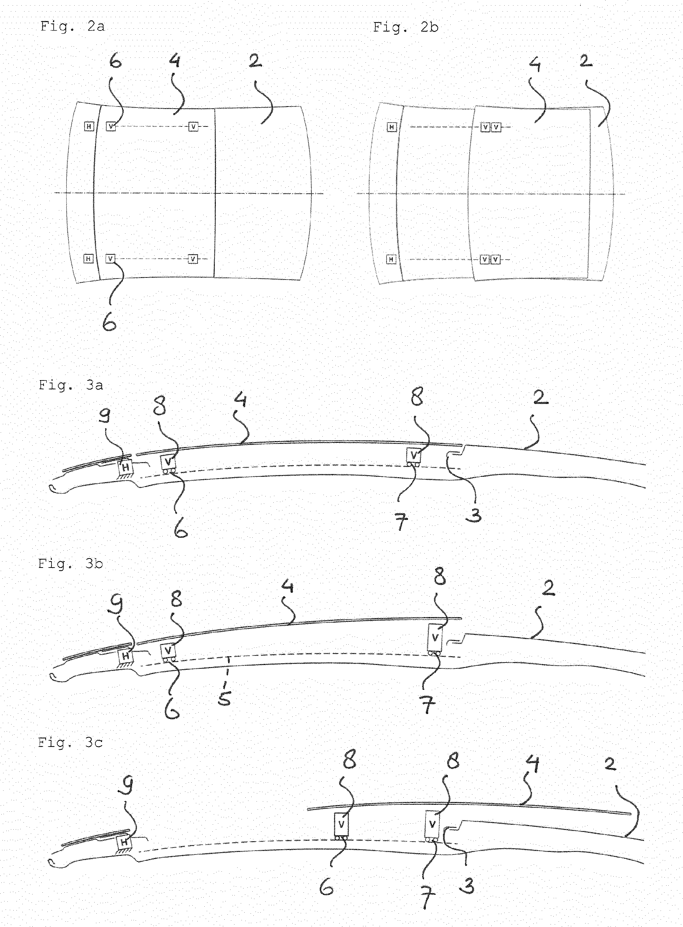

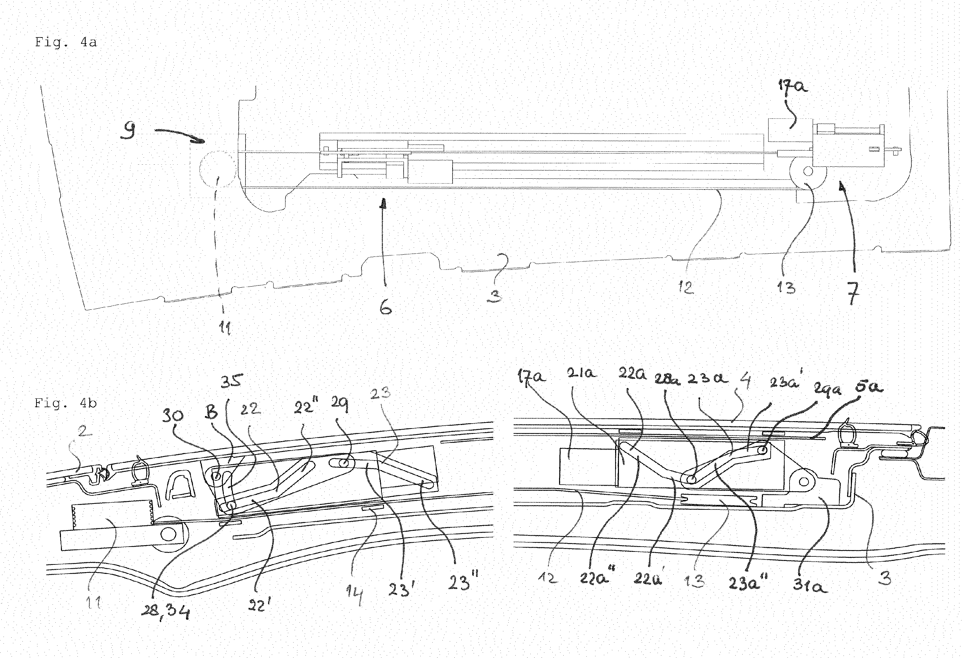

The open roof construction comprises a stationary part, such as a frame 3 (a small part is shown in Fig. 3), and a closure, in this case in the form of a rigid and preferably transparent panel 4, for example made of glass or of plastic material, which is movably supported by frame 3 (Figs. 3 and 4). In this embodiment, panel 4 is movable between a closed position, in which roof opening 1 is closed and panel 4 is at least substantially coplanar with fixed roof 2, and an open position, in which panel 4 occupies a rearward position, at least partially above the fixed roof 2 (or a second rigid panel, not shown), in which at least a part of opening 1 is cleared. In the embodiment shown, panel 4 is first tilted from the closed position (Fig. 1a, 2a and 3a) to a venting position in which the rear edge of panel 4 is moved upwardly (Fig. 3b), and then moved rearwardly to positions above the fixed roof 2 (Fig. 1b, 2b and 3c).

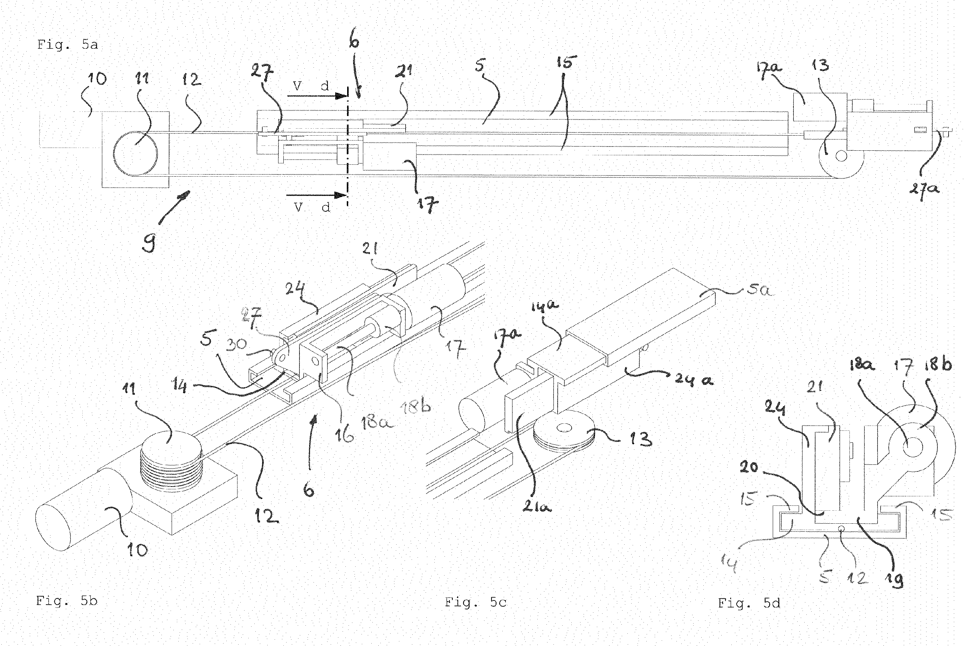

An operating mechanism is provided on each longitudinal side of panel 4 for effecting the movements of panel 4. In this case, the operating mechanism is supported by guide rails 5 (Figs. 5, 6 and 7) extending substantially parallel in longitudinal direction of the vehicle and mounted alongside the roof opening 1. The operating mechanism comprises on each guide rail 5 a first or front support member 6 supporting panel 4 near its front side. A second or rear support member 7 supports panel 4 a distance behind front support member 6. Other concepts are conceivable as well, for example one including a single or double central guide rail (splitting the opening 2 in two half openings) carrying one or two front support members 6, and two rear support members 7. Still other variations are possible.

As mentioned, panel 4 is supported by four support members 6, 7, each supporting panel 4 in a corner thereof when panel 4 is in its closed position. In the spoiler-type of roof as shown in Figs. 2 and 3, rear support members 7 are substantially fixed in horizontal direction and are adjustable in vertical direction only (compare Fig. 3a and 3b, c). The small horizontal displacement as shown by a comparison of Figs. 3a and 3b is the result of the vertical adjustment, not of a displacement by a horizontal drive member.

The front support members 6 are adjustable in horizontal and vertical direction. For vertical adjustment of front and rear support members 6, 7 they each comprise their own vertical drive member/drive system 8 indicated by V in Figs. 2 and 3. Front support members 6 are adjustable in horizontal direction by means of their own horizontal drive member/drive system 9 (also indicated by an H), in the embodiment of Figs. 2 and 3 in the form of an electric motor controlled by a central control unit and connected to both front support members 6 through connecting elements 12 (Fig. 4). These may include for example elongated flexible connecting members, such as push-and-pull cables engaged with an output gear of the electric motor, or by other members described with reference to Figs. 4 - 8. As is shown, the parts of the front support members 6 that cause the vertical adjustment of panel 4 are at least partly moving with panel 4 when it is driven by horizontal drive system 9. The support member 6, 7 comprises the movable parts between panel 4 and guide rail 5 or stationary part 3.

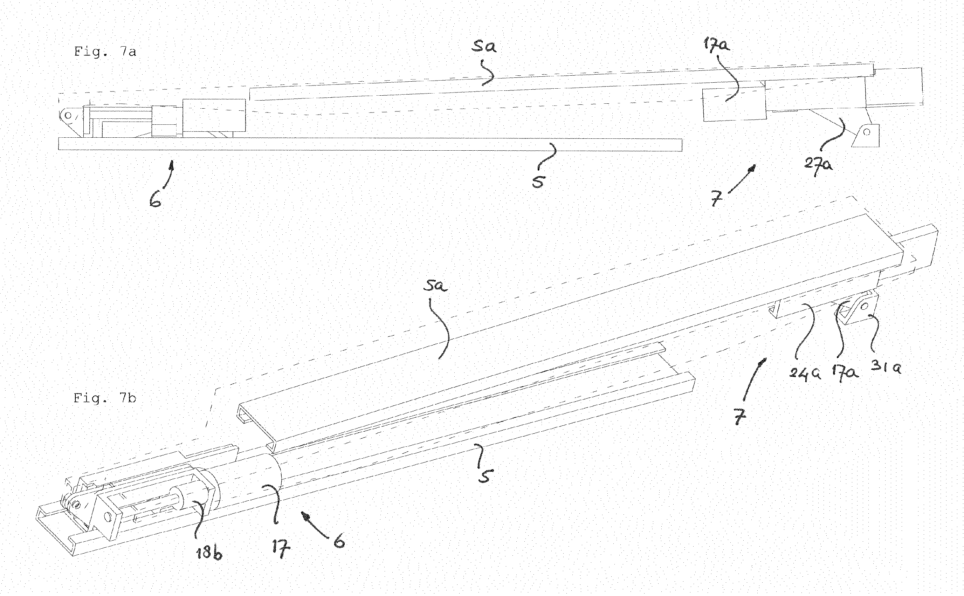

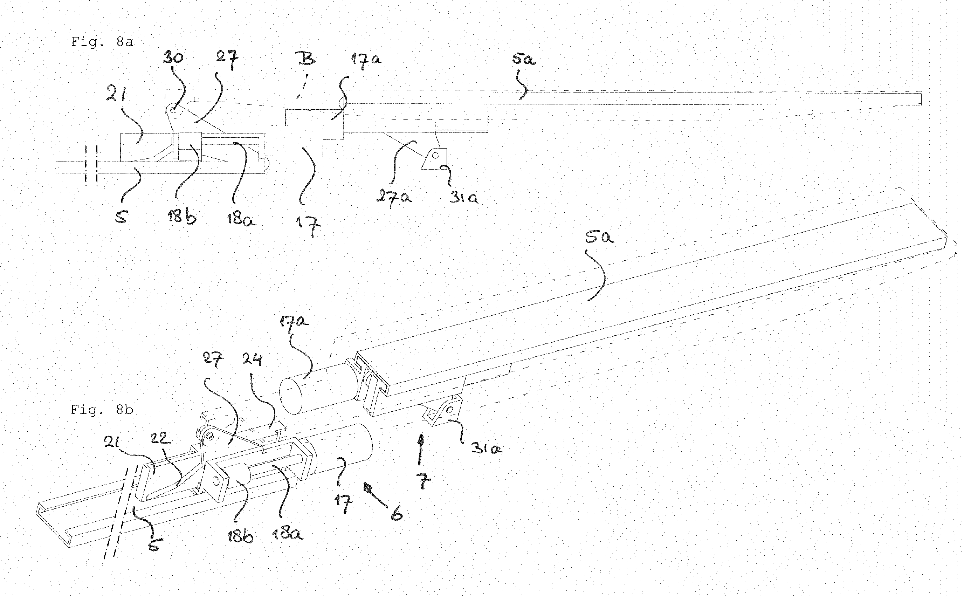

The rear support members 7 are connected to panel 4 through a panel guide rail 5a (shown in Figs. 4 - 8) such that, when front support members 6 move horizontally after rear support members 7 have lifted the rear side of panel 4 upwardly (Fig. 3b and 7), panel 4 slides along rear support members 7 to a position in which a substantial part of roof opening 1 is opened (Fig. 3c and 8). For making these movements, the front and rear support members 6, 7 are adjusted in vertical direction independently from each other and independently from the horizontal displacement, so that panel 4 can be allowed to make all the movements that are desirable. For example, it is easy to adjust rear support members 7 in vertical direction when panel 4 is moved backwardly, so that panel 4 is positioned vertically as close as possible to fixed roof 2 in rear positions.

Figs. 4 - 8 show the operating mechanism of the open roof construction and positions of Fig. 3a - 3c in more detail.

First of all, Figs 4 and 5 show horizontal drive system 9 for moving front support member 6. The horizontal drive system 9 includes an electric motor 10, a driven pulley 11 drivably connected to electric motor 10, a cable 12, attached to and running around pulley 11 and around a freely rotating pulley 13, while the cable is also attached to front support member 6 in order to slide it along guide rail 5. It has a cross-section with a U-shaped part and two opposite flanges 15 at the free ends. Cable 12 is not formed as a closed loop, but its ends are attached to driven pulley 11, so that one end is rolled-up, while the other end is unrolled when pulley 11 is rotated. This ensures that cable 12 has a fixed relationship to driven pulley 11, so that slip between cable 12 and pulley 11 cannot occur.

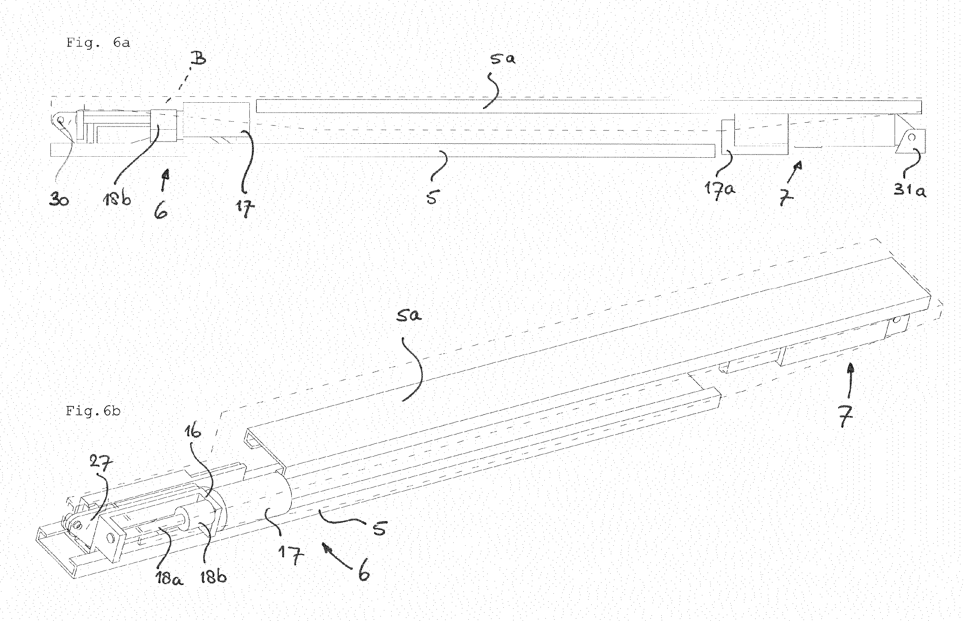

Figs. 4 - 8 also show front support member 6 in more detail. It comprises a slide 14 engaging guide rail 5 so as to be slidable on the one hand, but properly guided on the other hand. The slide 14 supports a housing 16 to which an electric motor 17 is attached. The electric motor 17 has an output shaft which is provided with a linear screw spindle 18a adapted to move a spindle nut/drive member 18b back and forth. As is shown in Fig. 5d, the drive member 18b carries a sidewardly protruding cam 19 engaging a recess 20 in a curve plate 21 including a first and second slot 22, 23 Fig. 4b). Curve plate 21 is thus slidable in longitudinal direction with respect to slide 14 and is supported and guided by a vertical wall 24. A lever 27 has a first pin 28 slidably engaging first slot 22 and a second pin 29 slidably engaging second slot 23. A pivot 30 pivotally connects lever 27 to a bracket B (shown in dashed lines in Figs. 6, 7 and 8) of panel 4. Slots 22 and 23 include a first slot portion 22', 23' which has a first slope and a connecting second slot portion 22", 23" having a second, steeper slope. Lever 27 has its pins 28, 29 engage first slot portions 22', 23' when it is in its lower positions. A pin 34, in this case aligned with first pin 28, engages in arced slot 35 limiting rotation of lever 27 and providing additional stability to lever 27. Cable 12 is provided with cable fasteners (not shown) to attach cable 12 to front support member 6 through holes in slide 14 (not shown).

The parts of rear support member 7 are in this case more or less the same as that of front support 6, but being mounted to the lower side of panel 4 instead of to the upper side of frame 3. All parts of rear support member 7 are mounted upside down with respect to the parts of front support member 6. Guide rail 5a is thus attached to the lower side of panel 4, while pivot 30a of lever 27a rotates in a bracket 31a attached to frame 3 (Fig. 4b). In curve plate 21a, slots 22a, 23a are now connected, and pins 28a and 29a of lever 27a are used to engage slots 22a, 23a. First and second slots 22a, 23a again have a first slot portion 22a', 23a' and a steeper second slot portion 22", 23a", wherein first slot portion 22', 23a' is used to set the height of panel 4 in its closed position

As can be seen from the figures, some parts of front and rear support members 6, 7 are slightly different (e.g. lever 27, 27a, curve plate 21, 21a), but others are exactly the same (e.g. slide 14, 14a, electric motor 17, 17a, spindle drive 18, 18a, 18b, guide rail 5, 5a), which reduces the total number of different parts for the operating mechanism. Another advantage of attachment of the drive member/electric motor 17a to panel 4 is that it moves away from guide rail 5 when panel 4 is moved upwardly at the rear side. This would make it possible to extend guide rail 5 rearwardly and allow front support member 6 to move rearwardly without being blocked by electric motor 17a of rear support member 7 if that would be attached to frame 3. This allows more design freedom and/or a smaller package.

Electric motor 17a must of course be connected to a power supply (not shown). This can be the same power supply as for the electric motor 10 on frame 3 and as electric motor 17a only makes a small movement relative to frame 3, a normal cable or flat cable (not shown) is sufficient to provide the flexible connection between the moving electric motor 17a and stationary frame 3. Sliding contacts or a flat cable can be used if the connection must be maintained through larger movements, as is for example the case with electric motor 17 of front support member 6.

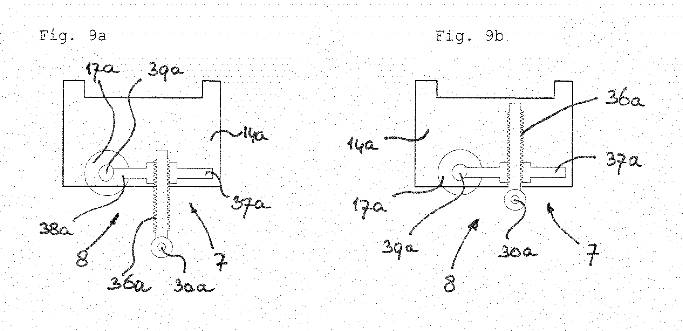

Figs. 9a, 9b show an alternative rear support member 7 having a different vertical drive system 8. It includes a direct spindle drive in which a substantially vertical, linear spindle 36a is connected to frame 3 (not shown) at its lower end through pivot 30a. A spindle nut 37a is rotatably supported on slide 14a and the outer circumference of spindle nut 37a is configured as a worm wheel 38a cooperating with a worm 39a mounted on the output shaft of electric motor 17a.

The invention is not limited to the embodiment shown in the drawing and described above which may be varied in different manners within the scope of the appended claims.

For example, it is possible to also mount the drive member of the front support member to the panel, or even only at the front support member. Further it is conceivable to use similar front and rear support members for a so-called inslider type roof, in which the closure panel can be moved downwardly from its closed position in order to be moved rearwardly below the fixed roof. Other roof types and other closure elements, such as slats or multi panels are conceivable as well. The terms vertical and horizontal as used herein should be considered in a broad sense. It will depend on the orientation of guide rails 5 or frame how the movement of the support members will be. Vertical means substantially perpendicular to the local orientation of the guide rail/frame and horizontal means substantially parallel to the guide rail. The guide rails can be slightly curved so that the orientation of the front support members will vary if they move along their guide rail.

## Claims

1. Open roof construction for a vehicle having a roof opening (1) in its fixed roof (2), comprising a stationary part (3) for attachment to the roof, and at least one closure (4) having a front and a rear side and being supported by an operating mechanism, the closure being adjustable between a closed position, in which it closes the roof opening, and an open position in which it is at least partly moved out of the roof opening, wherein the operating mechanism comprises at least one adjustable first support member (6) adjustably supporting the closure near its front side, and adjustable second support members (7) adjustably supporting the closure a distance behind the front side, at least the second support members having their own vertical drive member (8) for obtaining a vertical adjustment of the closure at the position of the second support members, the drive member (8) being arranged for vertically adjusting the second support member (7) to move the closure up and down at least at a distance behind the first support member (6), the drive member including an electric motor (17a) and being operatively in engagement with the second support member (7) which is connected to the closure (4) and to the stationary part (3), **characterized in that** the electric motor (17a) of the drive member (8) is mounted to the closure (4).

2. Open roof construction according to claim 1, wherein the second support member (7) is connected to the stationary part (3) substantially fixed in a horizontal direction.

3. Open roof construction according to claim 1 or 2, wherein the first and second support members (6, 7) have a similar structure with at least some parts being the same, but the second support members (7) are mounted in an upside down relationship with respect to the first support member (6).

4. Open roof construction according to any of the preceding claims, wherein the first support member (6) comprises a first slide (14) which is mounted on a guide rail (5) alongside the roof opening (1) and is provided with at least a horizontal drive member (9) to drive the first support member (6) and the closure (4) in horizontal direction along the guide rail (5) and the second support members (7) are provided on a second slide (14a) which is slidable with respect to a closure guide rail (5a), such that the closure (4) is able to slide with respect to the second support members (7) when the first support member (6) and the closure (4) are driven by the horizontal drive member (9).

5. Open roof construction according to claim 3 and 4, wherein at least the first and second slide (14, 14a) are equal.

6. Open roof construction according to any of the preceding claims, wherein the second support member (7) includes a lever (27a) pivotally connected to the stationary part (3, 31a) and controlled by a drivable curve plate (21a).

7. Open roof construction according to claim 6, wherein the vertical drive member (8) includes a self-braking linear spindle (36a) directly connected to an output shaft of the electric motor and a spindle nut (37a) mounted on the spindle and connected to the curve plate (21a).

8. Open roof construction according to claim 4, wherein the first and second slide (14, 14a) are provided with a housing (16) carrying the vertical drive member (8) and the first or second support member (6, 7).

9. Open roof construction according to claim 7, wherein the curve plate (21a) includes at least one curve (22a, 23a) for vertically adjusting the second support member to move the closure up and down at least at a distance behind the front side.

10. Open roof construction according to claim 9, wherein the at least one curve (22a, 23a) only has inclined portions.

11. Open roof construction according to claim 9 or 10 , wherein the driven part (36a) of the spindle drive (36a, 37a) is attached to the closure (4).

12. Open roof construction according to claim 11 wherein the lever (27a) of the second support member (7) has at least one pin (28a, 29a) in engagement with the curve (22a, 23a) of the curve plate (21a) and being pivotally attached to the stationary part (3).

## Patentansprüche

1. Offendachkonstruktion für ein Fahrzeug, das eine Dachöffnung (1) in seinem festen Dach (2) hat, aufweisend einen stationären Teil (3) zur Anbringung an dem Dach, und wenigstens ein Verschließteil (4), das eine vordere und eine hintere Seite hat und von einem Betätigungsmechanismus gestützt ist, wobei das Verschließteil einstellbar ist zwischen einer geschlossen-Position, in welcher es die Dachöffnung verschließt, und einer offen-Position, in welcher es zumindest teilweise aus der Dachöffnung herausbewegt ist, wobei der Betätigungsmechanismus aufweist wenigstens ein einstellbares erstes Stützelement (6), welches das Verschließteil nahe dessen vorderer Seite stützt, und einstellbare zweite Stützelemente (7), welche das Verschließteil in einem Abstand hinter der vorderen Seite einstellbar abstützen, wobei wenigstens die zweiten Stützelemente ihr eigenes Vertikalantriebselement (8) haben zum Erzielen einer vertikalen Einstellung des Verschließteils an der Position der zweiten Stützelemente, wobei das Antriebselement (8) angeordnet ist zum vertikalen Einstellen des zweiten Stützelements (7), um das Verschließteil zumindest in einem Abstand hinter dem ersten Stützelement (6) nach oben und unten zu bewegen, wobei das Antriebselement einen Elektromotor (17a) aufweist und mit dem zweiten Stützelement (7) im Betriebseingriff ist, welches mit dem Verschließteil (4) und dem stationären Teil (3) verbunden ist, **dadurch gekennzeichnet, dass** der Elektromotor (17a) des Antriebselements (8) an dem Verschließteil (4) angebracht ist.

2. Offendachkonstruktion gemäß Anspruch 1, wobei das zweite Stützelement (7) im Wesentlichen in einer Horizontalrichtung fixiert mit dem stationären Teil (3) verbunden ist.

3. Offendachkonstruktion gemäß Anspruch 1 oder 2, wobei die ersten und zweiten Stützelemente (6, 7) eine gleiche Struktur haben, wobei zumindest einige Teile die Gleichen sind, wobei aber die zweiten Stützelemente (7) in einer umgedrehten Beziehung bezüglich des ersten Stützelements (6) angebracht sind.

4. Offendachkonstruktion gemäß irgendeinem der vorhergehenden Ansprüche, wobei das erste Stützelement (6) einen ersten Schlitten (14) aufweist, der angebracht ist an einer Führungsschiene (5) längsseits der Dachöffnung (1) und bereitgestellt ist mit wenigstens einem Horizontalantriebselement (9), um das erste Stützelement (6) und das Verschließteil (4) in Horizontalrichtung entlang der Führungsschiene (5) anzutreiben, und wobei die zweiten Stützelemente (7) an einem zweiten Schlitten (14a) bereitgestellt sind, welcher bezüglich einer Verschließteilführungsschiene (5a) verschiebbar ist, so dass das Verschließteil (4) imstande ist, sich bezüglich der zweiten Stützelemente (7) zu verschieben, wenn das erste Stützelement (6) und das Verschließteil (4) von dem Horizontalantriebselement (9) angetrieben werden.

5. Offendachkonstruktion gemäß Anspruch 3 und 4, wobei wenigstens der erste und der zweite Schlitten (14, 14a) gleich sind.

6. Offendachkonstruktion gemäß irgendeinem der vorhergehenden Ansprüche, wobei das zweite Stützelement (7) einen Hebel (27a) aufweist, der mit dem stationären Teil (3, 31a) schwenkbar verbunden ist und von einer antreibbaren Kurvenplatte (21a) gesteuert ist.

7. Offendachkonstruktion gemäß Anspruch 6, wobei das Vertikalantriebselement (8) aufweist eine selbstbremsende Linearspindel (36a), die direkt mit einer Ausgangswelle des Elektromotors verbunden ist, und eine Spindelmutter (37a), die auf der Spindel angebracht ist und mit der Kurvenplatte (21a) verbunden ist.

8. Offendachkonstruktion gemäß Anspruch 4, wobei der erste und der zweite Schlitten (14, 14a) mit einem Gehäuse (16) bereitgestellt sind, welches das Vertikalantriebselement (8) und das erste und das zweite Stützelement (6, 7) trägt.

9. Offendachkonstruktion gemäß Anspruch 7, wobei die Kurvenplatte (21a) wenigstens eine Kurve (22a, 23a) aufweist zum vertikalen Einstellen des zweiten Stützelements, um das Verschließteil zumindest in einem Abstand hinter der vorderen Seite nach oben und unten zu bewegen.

10. Offendachkonstruktion gemäß Anspruch 9, wobei die wenigstens eine Kurve (22a, 23a) nur geneigte Abschnitte hat.

11. Offendachkonstruktion gemäß Anspruch 9 oder 10, wobei der angetriebene Teil (36a) des Spindelantriebs (36a, 37a) an dem Verschließteil (4) angebracht ist.

12. Offendachkonstruktion gemäß Anspruch 11, wobei der Hebel (27a) des zweiten Stützelements (7) wenigstens einen Stift (28a, 29a) im Eingriff mit der Kurve (22a, 23a) der Kurvenplatte (21a) hat und schwenkbar an dem stationären Teil (3) angebracht ist.

## Revendications

1. Construction de toit ouvrant pour un véhicule ayant une ouverture de toit (1) dans son toit fixe (2), comprenant une partie immobile (3) à fixer au toit, et au moins une fermeture (4) ayant un côté avant et un côté arrière et étant supportée par un mécanisme opérationnel, la fermeture étant ajustable entre une position fermée, dans laquelle elle ferme l'ouverture de toit, et une position ouverte dans laquelle elle est au moins en partie déplacée hors de l'ouverture de toit, le mécanisme opérationnel comprenant au moins un premier organe de support (6) ajustable supportant de façon ajustable la fermeture près de son côté avant, et des seconds organes de support (7) ajustables supportant de façon ajustable la fermeture à une distance derrière le côté avant, au moins les seconds organes de support ayant leur propre organe d'entraînement vertical (8) pour obtenir un ajustement vertical de la fermeture à la position des seconds organes de support, l'organe d'entraînement (8) étant agencé pour ajuster verticalement le second organe de support (7) afin de déplacer la fermeture vers le haut et vers le bas au moins à une distance derrière le premier organe de support (6), l'organe d'entraînement comportant un moteur électrique (17a) et étant opérationnellement en engagement avec le second organe de support (7) qui est raccordé à la fermeture (4) et à la partie immobile (3), **caractérisée en ce que** le moteur électrique (17a) de l'organe d'entraînement (8) est monté sur la fermeture (4).

2. Construction de toit ouvrant selon la revendication 1, dans laquelle le second organe de support (7) est raccordé à la partie immobile (3) sensiblement fixe dans une direction horizontale.

3. Construction de toit ouvrant selon la revendication 1 ou 2, dans laquelle les premier et second organes de support (6, 7) ont une structure similaire avec au moins certaines parties qui sont identiques, mais les seconds organes de support (7) sont montés dans une relation retournée par rapport au premier organe de support (6).

4. Construction de toit ouvrant selon l'une quelconque des revendications précédentes, dans laquelle le premier organe de support (6) comprend une première coulisse (14) qui est montée sur un rail de guidage (5) le long de l'ouverture de toit (1) et est pourvue d'au moins un organe d'entraînement horizontal (9) afin d'entraîner le premier organe de support (6) et la fermeture (4) en direction horizontale le long du rail de guidage (5) et les seconds organes de support (7) sont prévus sur une seconde coulisse (14a) qui est coulissante par rapport à un rail de guidage de fermeture (5a), de sorte que la fermeture (4) soit capable de coulisser par rapport aux seconds organes de support (7) lorsque le premier organe de support (6) et la fermeture (4) sont entraînés par l'organe d'entraînement horizontal (9).

5. Construction de toit ouvrant selon les revendications 3 et 4, dans laquelle au moins les première et seconde coulisses (14, 14a) sont égales.

6. Construction de toit ouvrant selon l'une quelconque des revendications précédentes, dans laquelle le second organe de support (7) comporte un levier (27a) raccordé en pivotement à la partie immobile (3, 31a) et commandé par une plaque courbe (21a) entraînable.

7. Construction de toit ouvrant selon la revendication 6, dans laquelle l'organe d'entraînement vertical (8) comporte une fusée linéaire à freinage automatique (36a) raccordée directement à un arbre de sortie du moteur électrique et un écrou de fusée (37a) monté sur la fusée et raccordé à la plaque courbe (21a).

8. Construction de toit ouvrant selon la revendication 4, dans laquelle les première et seconde coulisses (14, 14a) sont pourvues d'un boîtier (16) portant l'organe d'entraînement vertical (8) et le premier ou second organe de support (6, 7).

9. Construction de toit ouvrant selon la revendication 7, dans laquelle la plaque courbe (21a) comporte au moins une courbe (22a, 23a) pour ajuster verticalement le second organe de support afin de déplacer la fermeture vers le haut et vers le bas au moins à une distance derrière le côté avant.

10. Construction de toit ouvrant selon la revendication 9, dans laquelle l'au moins une courbe (22a, 23a) a uniquement des portions inclinées.

11. Construction de toit ouvrant selon la revendication 9 ou 10, dans laquelle la partie entraînée (36a) de l'entraînement de fusée (36a, 37a) est fixée à la fermeture (4).

12. Construction de toit ouvrant selon la revendication 11, dans laquelle le levier (27a) du second organe de support (7) a au moins une cheville (28a, 29a) en engagement avec la courbe (22a, 23a) de la plaque courbe (21a) et qui est fixée en pivotement à la partie immobile (3).
